Europäisches Patentamt

European Patent Office

Office européen des brevets

(11) Publication number: **0 064 682**
**B1**

(12) **EUROPEAN PATENT SPECIFICATION**

(45) Date of publication of patent specification: **13.08.86**

(51) Int. Cl.⁴: **B 60 R 13/06**

(21) Application number: **82103680.3**

(22) Date of filing: **29.04.82**

(54) **Rain gutter arrangement for automotive vehicle.**

(30) Priority: **08.05.81 JP 68964/81**

(43) Date of publication of application:
**17.11.82 Bulletin 82/46**

(45) Publication of the grant of the patent:
**13.08.86 Bulletin 86/33**

(84) Designated Contracting States:
**DE FR GB**

(56) References cited:
**DE-A-2 209 190**
**DE-U-1 894 563**
**US-A-3 596 980**
**US-A-3 938 856**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Omura, Yutaka**
**No. 1907-4, Ishikawa**
**Fujisawa City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

# Description

The present invention relates to a rain gutter arrangement for an automotive vehicle according to the precharacterizing part of patent claim 1. Such a rain gutter arrangement is known from US—A—3596980.

In the known rain gutter arrangement a first weather strip made from an elastomeric material is fixed to a door sash in an upper position of the door and a second weather strip made from an elastomeric material is fixed to a roof side rail and a front pillar of the vehicle, whereby a channel is formed when the door is closed, defined by both weather strips, the door sash and the roof side rail and the front pillar respectively. As the weather strips engage both the roof side rail and the front pillar as well as the door sash this channel is generally closed in circumferential direction.

In order to avoid wind noises which may be generated by parts protruding from a vehicle, in modern car designs rain collecting rails over the doors are missing. Therefore in a rain gutter arrangement of the aforementioned kind, it may happen that when opening the door, rain water from the roof may drop directly into the interior of the car, although the weather strip arranged in the lower position will collect some of it.

It is therefore an object of the present invention to provide a rain gutter arrangement of the aforementioned kind which is able to collect and to drain rain water from the roof irrespective of whether the vehicle door is opened or closed.

This object is attained by the characterizing features of patent claim 1. Preferred further embodiments of the invention are subject matter of the subclaims.

By the present invention the upper weather strip acts as a rain water collecting channel in the closed condition of the door as well as in the opened condition thereof. The collected rain water is effectively drained to the bottom of the door thereby preventing that rain water may drop from the roof into the compartment of the vehicle when the door is opened. Furthermore, the rain gutter arrangement of the invention provides for an effective reduction of wind noises.

The features and advantages of the arrangement of the present invention will become more clearly appreciated from the following description taken in conjunction with the accompanying drawings in which

Fig. 1 is a perspective sketch of the front door of a vehicle;

Fig. 2 is a sectional view taken along section line II—II of Fig. 1 showing a first embodiment of the present invention;

Fig. 3 is a perspective sketch showing the weather strip of Fig. 2;

Fig. 4 is a sectional view similar to Fig. 2, but showing a second embodiment of the present invention; and

Fig. 5 is a sectional view of a third embodiment of the present invention.

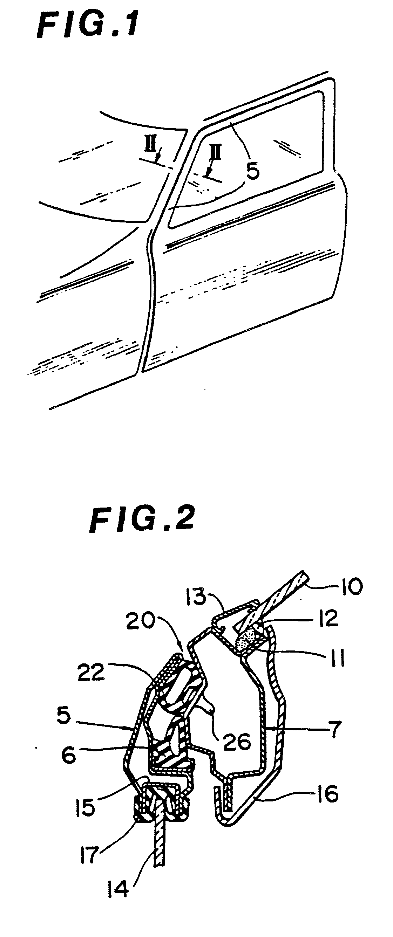

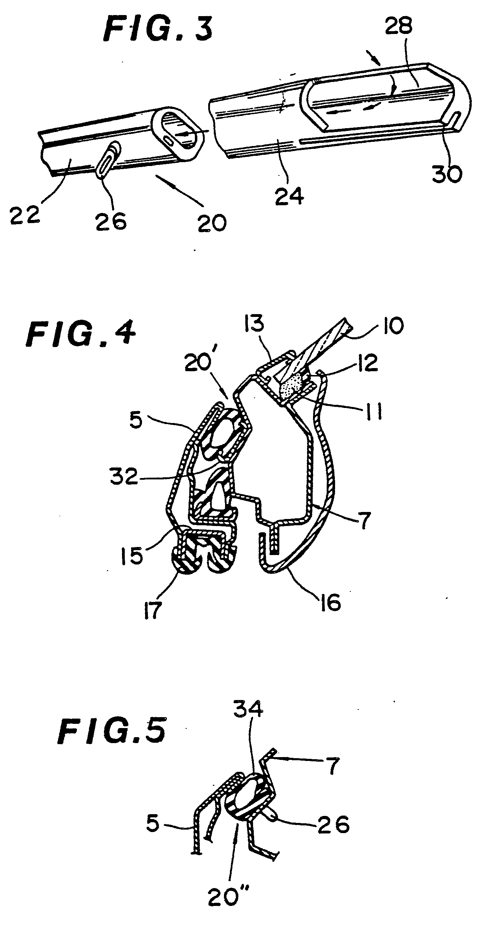

In fig. 1 the door portion of a vehicle is shown in order to explain where the section of figures 2 to 5 are taken.

Turning now to figures 2 and 4 a first embodiment of the invention is shown. The numeral 5 denotes a door sash, 6 a main door weather strip which is fixed to the sash 5 for engagement with a roof side rail and the front pillar 7, the letter is shown in fig. 4 and providing a seal between the cabin interior and the external ambient atmosphere.

Mounted on the front pillar 7 through an adhesive mass 11 and a rubber seal member 12 is a wind shield glass 10. Suitably mounted on the inner pannel of the pillar 7 is a pillar finish 16 and fixed to the outer pannel of the front pillar is a decorative mould 13. Attached to the bottom of the door sash 5 is a channel like member 15 which receives a weather strip 17 adapted to sealingly receive a door/window glass 14 therein.

In an upper position with respect to the aforementioned first weather strip 6 a second weather strip 20 is fixed to the front pillar 7. This second elastomeric weather strip 20 comprises a portion 22, which extends down the front pillar 7 and takes the form of a hollow tube-like arrangement which upon being contacted and compressed by the door sash 5, essentially fills the space defined between said sash and the front pillar 7 thus eliminating the air-dam of the prior art. The upper portion 24 of the weather strip which extends along the roof side rail has, as shown in Fig. 3, an opening 28 open to provide a collecting function. In this first embodiment the second weather strip 20 is formed as a single member and provided with grommet-like clips 26 which may be pressed into mating holes formed along the outer panel of the front pillar 7. The upper portion 24 of the strip is formed with and opening 28 for collecting rain water and a slot 30 adapted to engage a drip channel (not shown).

With this arrangement rain water or the like is collected in the upper portion 24 of the second weather strip 20 and thereafter drained off through the hollow tube like portion 22 leading down the front pillar 7.

Fig. 4 shows a second embodiment of the present invention. In this arrangement, the grommet like clips 26 of the first embodiment are dispensed with and replaced with a C-channel member 32 which is welded to the front pillar 7. As shown the second weather strip 20″ of this embodiment is adapted to be retainingly inserted into this channel member 32. This arrangement facilitates assembly, reduces weight and helps prevent rust formation in that the holes in the front pillar required in the first embodiment and the direct contact between the front pillar and the second strip, are eliminated.

Fig. 5 shows a third embodiment of the present invention. In this arrangement the portion of the second weather strip 20″ which extends down the front pillar is arranged to be open and have a curled lip 34 which is moved into contact with the front pillar 7 upon closure of the door and consequent compression of the second weather strip 20'' by the door sash 5. This embodiment features the advantage that should the drain channel become clogged with foreign matter, removal thereof is facilitated by simply rolling back the curled lip 34. Although this embodiment is shown secured to the front pillar by clips 26 similar to those used in the first embodiment, it may be secured via use of a C-channel member such as found in the second embodiment.

With the present invention it will be understood that as the air-dam formed by the prior art rain gutter arrangement is eliminated by the arrangement of the present invention, air tends to smoothly flow from the front pillar past the door sash lowering noise generation and air stagnation which tends to increase the air resistance of the vehicle.

## Claims

1. A rain gutter arrangement for an automotive vehicle which vehicle has a roof panel (1), a roof side rail (2) fixed to said roof panel (1) and a front pillar (7) depending from said roof panel (1), a door having a sash (5), said sash (5) juxtaposing said front pillar (7) and said roof side rail (2) when said door is closed, a first elastomeric weather strip (6) fixed to one of said roof side rail (2) and said front pillar (7) or said door sash (5) in a lower position and a second elastomeric weather strip (20) fixed to the other of said roof side rail (2) and said front pillar (7) or said door sash (5) in an upper position, said weather strips (6, 20) engaging both the roof side rail (2) and the front pillar (7) and the door sash (5) when said door is closed, characterized in that said second elastomeric weather strip (20) is a tube having a first portion (24) extending along and being fixed to said roof rail (2) and being formed with a cut out opening (28) for allowing water to enter into the interior of said tube even when the door is closed and a second portion (22) extending along said front pillar (7) and being arranged to convey water entering said first portion (24) therethrough, towards the bottom of the door.

2. A rain gutter arrangement as claimed in claim 1, wherein said second portion (22) of said second weather strip (20) is arranged to be open and have a curled lip (34) which is pressed into contact with said front pillar (7) when said door is closed.

3. A rain gutter arrangement as claimed in claim 1 or claim 2 wherein said second portion 22 of said second weather strip (20) is provided with clips (26) which engage said front pillar.

4. A rain gutter arrangement as claimed in claims 1 or 2, wherein said second portion (22) of said second weather strip (20) is received in a C-channel-member (32) fixed to said front pillar (7).

5. A rain gutter arrangement as claimed in one of the preceding claims wherein the first portion (24) of said second weather strip is formed with a slot (30) for receiving a drip channel secured to said roof side rail too.

## Patentansprüche

1. Regenrinnenanordnung für ein Kraftfahrzeug, welches Fahrzeug ein Dachblech (1), eine am Dachblech (1) befestigte Dachseitenschiene (2) und einen Frontpfosten (7), der sich vom Dachblech (1) nach unten erstreckt, aufweist, mit einer einen Fensterrahmen (5) aufweisenden Tür, welcher Fensterrahmen (5) dem Frontpfeiler (7) und der Dachseitenschiene (2) benachbart ist, wenn die Tür geschlossen ist, einem ersten elastomeren Keder (6), der entweder an der Dachseitenschiene (2) und dem Frontpfeiler (7) oder dem Türfensterrahmen (5) an einer unteren Stelle befestigt ist, und einem zweiten elastomeren Keder (20), der an dem Türfensterrahmen (5) bzw. der Dachseitenschiene (2) und dem Frontpfeiler an einer oberen Stelle befestigt ist, wobei die Keder (6, 20) sowohl an der Dachseitenschiene (2) und dem Frontpfeiler als auch an dem Türfensterrahmen (5) anliegen, wenn die Tür geschlossen ist, dadurch gekennzeichnet, daß der zweite elastomere Keder (20) ein Rohr ist, mit einem ersten Abschnitt (24), der sich längs der Dachseitenschiene (2) erstreckt und daran befestigt ist und mit einer ausgeschnittenen Öffnung (28) versehen ist, die den Eintritt von Wasser in das Innere des Rohres ermöglicht, selbst wenn die Tür geschlossen ist, und mit einem zweiten Abschnitt (22), der sich längs des Frontpfeilers (7) erstreckt und dazu eingerichtet ist, das in den ersten Abschnitt (24) eintretende Wasser hindurch gegen das untere Ende der Tür zu leiten.

2. Regenrinnenanordnung nach Anspruch 1, bei der der zweite Abschnitt (22) des zweiten Keders (20) so gestaltet ist, daß er offen ist und eine gebogene Lippe (34) hat, die in Berührung mit dem Frontpfeiler (7) gedrückt wird, wenn die Tür geschlossen ist.

3. Regenrinnenanordnung nach Anspruch 1 oder Anspruch 2, bei der der zweite Abschnitt (22) des zweiten Keders (20) mit Klammern (26) versehen ist, die an dem Frontpfeiler angreifen.

4. Regenrinnenanordnung nach den Ansprüchen 1 oder 2, bei der der zweite Abschnitt (22) des zweiten Keders (20) in einem C-Kanalelement (32) angeordnet ist, das an dem Frontpfeiler (7) befestigt ist.

5. Regenrinnenanordnung nach einem der vorhergehenden Ansprüche, bei der der erste Abschnitt (24) des zweiten Keders mit einem Schlitz (30) zur Aufnahme eines Tropfenkanals versehen ist, der ebenfalls an der Dachseitenschiene befestigt ist.

## Revendications

1. Agencement de gouttière pour un véhicule automobile lequel véhicule a un panneau de plafond (1), un rail côté plafond (2), fixé audit panneau de plafond (1) et un pilastre avant (7) pendant dudit panneau de plafond (1), une porte ayant un châssis (5), ledit châssis (5) étant juxtaposé audit pilastre avant (7) et audit rail côté plafond (2) lorsque ladite porte est fermée, un premier bourrelet étanche en élastomère (6) fixé à l'un dudit rail côté plafond (2) et dudit pilastre avant (7) ou dudit châssis de porte (5) en une position inférieure et un second bourrelet étanche en élastomère (20) fixé à l'autre dudits rail côté plafond (2) et dudit pilastre avant (7) ou dudit châssis de porte (5) en une position supérieure, lesdits bourrelets étanches (6, 20) engageant le rail côté plafond (2) et le pilastre avant (7) et le châssis de porte (5) lorsque ladite porte est fermée, caractérisé en ce que ledit second bourrelet étanche en élastomère (20) est un tube ayant une première partie (24) s'étendant le long de et étant fixée audit rail (2) du plafond et étant formée avec une ouverture (28) découpée pour permettre à l'eau d'entrer à l'intérieur dudit tube même lorsque la porte est fermée et une seconde partie (22) s'étendant le long dudit pilastre avant (7) et agencée pour transporter l'eau entrant dans ladite première partie (24) à travers elle, vers le bas de la porte.

2. Agencement de gouttière selon la revendication 1 où ladite seconde partie (22) dudit second bourrelet étanche (20) est agencée pour être ouverte et a une lèvre retournée (34) qui est pressée en contact avec ledit pilastre avant (7) lorsque ladite porte est fermée.

3. Agencement de gouttière selon la revendication 1 ou la revendication 2 où ladite seconde partie (22) dudit second bourelet étanche (20) est pourvue de pinces (26) qui engagent ladite pilastre avant.

4. Agencement de gouttière selon la revendication 1 ou 2 où ladite seconde partie (22) dudit second bourrelet étanche (20) est reçue dans un organe profilé en C (32) fixé audit pilastre avant (7).

5. Agencement de gouttière selon l'une quelconque des revendications précédentes où la première partie (24) dudit second bourrelet étanche présente une fente (30) pour recevoir une gorge d'égouttement fixée également audit rail côté plafond.

0 064 682

# FIG.1

# FIG.2

1

## *FIG. 3*

28

22    26    20    24    30

## *FIG. 4*

13    10

20'    12

5    11

32    7

15

17    16

## *FIG.5*

34

7

5    26

20"